# EUROPÄISCHE PATENTSCHRIFT

(11) **EP 2 158 248 B1**
(45) Veröffentlichungstag und Bekanntmachung des Hinweises auf die Patenterteilung: **15.08.2012**
(21) Anmeldenummer: 08760687.7
(22) Anmeldetag: 06.06.2008
(51) Int. Cl.: C08G 59/00, C08G 59/68, C08L 63/00

(54) **KATALYSATOR FÜR DIE HÄRTUNG VON EPOXIDEN**
CATALYST FOR CURING EPOXIDES
CATALYSEUR POUR LE DURCISSEMENT D'ÉPOXYDES

(30) Priorität: 11.06.2007 EP 07109980
(43) Veröffentlichungstag der Anmeldung: 03.03.2010
(73) Patentinhaber: BASF SE, 67056 Ludwigshafen (DE)
(72) Erfinder: DEGEN, Georg, 64653 Lorsch (DE); MAASE, Matthias, New Jersey, 07945 (US); WITTENBECHER, Lars, 40545 Düsseldorf (DE); DÖRING, Manfred, 76744 Wörth (DE); ARNOLD, Ulrich, 76646 Bruchsal (DE)
(86) Internationale Anmeldenummer: PCT/EP2008/057117
(87) Internationale Veröffentlichungsnummer: WO 2008/152003

(56) Entgegenhaltungen:
- WO-A-98/37134
- DE-A1- 2 416 408
- US-A- 3 635 894
- YANGYANG SUN ET AL: "Room Temperature Stable Underfill with Novel Latent Catalyst for Wafer Level Flip-Chip Packaging Applications" ELECTRONIC COMPONENTS AND TECHNOLOGY CONFERENCE 2006, 56TH SAN DIEGO, CA MAY 30 - JUNE 2, 2006, PISCATAWAY, NJ, USA,IEEE, 30. Mai 2006 (2006-05-30), Seiten 1905-1910, XP010923719 ISBN: 978-1-4244-0152-9
- DATABASE WPI Week 200725 Thomson Scientific, London, GB; AN 2007-244709 XP002495002 & JP 2006 241139 A (SUMITOMO CHEM CO LTD) 14. September 2006 (2006-09-14)

## Beschreibung

Die Erfindung betrifft die Verwendung von 1, 3 substituierten Imidazoliumsalzen der Formel I 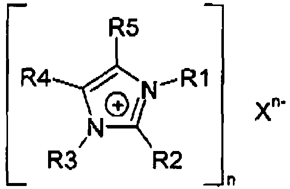 worin
R1 und R3 unabhängig voneinander für einen Methyl-, Ethyl-, n-Propyl-, Isopropyl-, n-Butyl-, sec.-Butyl- oder tert.-Butyl Rest stehen
R4 und R5 unabhängig voneinander für ein H-Atom oder für einen organischen Rest mit 1 bis 20 C-Atomen stehen, wobei R4 und R5 auch zusammen einen aliphatischen oder aromatischen Ring ausbilden können,
R2 für ein H-Atom steht,
X für ein Anion mit einem pK_{B} - Wert kleiner 13 (gemessen bei 25°C, 1 bar in Wasser oder Dimethylsulfoxid) steht und ausgewählt ist aus Cyanat und Verbindungen mit 1 bis 20 C-Atomen, welche eine Carboxylatgruppe und außer den Sauerstoffatomen der Carboxylatgruppe keine weiteren Heteroatome enthalten
und
n für 1 steht,
wobei 1-Ethyl-2,3-dimethylimidazoliumacetat und 1-Ethyl-2,3-dimethyllmidazollum - acetat-essigsäure komplex als Imidazoliumsalz ausgeschlossen sind
als latenter Katalysator für die Härtung von Epoxyverbindungen enthaltenden Zusammensetzungen.

Epoxyverbindungen werden zur Herstellung von Beschichtungen, als Klebstoff, zur Herstellung von Formkörpern und für viele andere Zwecke verwendet. Sie liegen dazu während der Verarbeitung im allgemeinen in flüssiger Form vor (als Lösungen in geeigneten Lösemitteln oder als flüssige, lösemittelfreie 100 % Systeme. Die Epoxyverbindungen sind im allgemeinen niedermolekular. Bei der Verwendung werden sie gehärtet. Es sind unterschiedliche Möglichkeiten zur Härtung bekannt. Ausgehend von Epoxyverbindungen mit mindestens zwei Epoxygruppen kann mit einer Aminoverbindung oder einer Säureanhydridverbindung mit mindestens zwei Amino- bzw. mindestens einer Anydridgruppe eine Härtung durch eine Polyadditionsreaktion (Kettenverlängerung) erfolgen. Amino- oder Säureanhydridverbindungen mit hoher Reaktivität werden im allgemeinen erst kurz vor der gewünschten Härtung zugesetzt. Es handelt sich daher um sogenannte zweikomponentige (2K) -Systeme.

Weiterhin können Katalysatoren für die Homo- oder Copolymerisation der Epoxyverbindungen verwendet werden. Bekannt sind Katalysatoren, die erst bei hohen Temperaturen aktiv sind (latente Katalysatoren). Derartige latente Katalysatoren haben den Vorteil, dass einkomponentige (1 K) Systeme möglich sind, d.h. die Epoxyverbindungen können die latenten Katalysatoren enthalten, ohne dass es zu einer unerwünschten frühzeitigen Härtung kommt.

Als latente Katalysatoren kommerziell erhältlich sind insbesondere Addukte des Bortrifluorids an Aminen (BF3-Monoethylamin), quaternäre Phosphoniumverbindungen und Dicyandiamid (DICY).

Im Journal of Polymer Science: Polymer Letters Edition, Vol. 21, 633-638 (1983) wird die Verwendung von 1,3-Dialkylimidazoliumsalzen für diesen Zweck beschrieben. Bei ihrer Zersetzung oberhalb 175°C werden 1-Alkylimidazole freigesetzt, welche dann die Härtung bewirken. Variiert wurde die Struktur des Kations, als Anionen wurden die Halogenide Chlorid und Iodid eingesetzt.

Aus DE-A 2416408 sind Imidazolum-borate, wie Imidazolium-tetraphenylborat oder Imidazolium-tetra n-butylborat bekannt.

US 3 635 894 beschreibt 1,3 Dialkyl-imidazolium-salze mit Anionen, ausgewählt aus Chloriden, Bromiden und Iodiden als latente Katalysatoren für Epoxyverbindungen.

Kowalczyk and Spychaj, Polimery (Warsaw, Poland) (2003), 48(11/12), 833-835 beschreiben die Verwendung von 1-Butyl-3-methyl-imidazolium tetrafluoroborat als latenter Katalysator für Epoxyverbindungen. Die Wirkung des Katalysators setzt erst bei 190°C ein.

Sun, Zhang and Wong, Journal of Adhesion Science and Technology (2004), 18(1), 109-121 offenbaren die Verwendung von 1-Ethyl-3-methyl-imidazoliumhexafluoro-phosphat als latenter Katalysator. Die Wirkung setzt erst bei 196°C ein.

In JP 2004217859 werden Imidazolium-tetraalkyl-borate oder Imidazolium-dialkyldithiocarbamate verwendet. Die Aktivierung erfolgt durch Bestrahlung mit energiereichem Licht.

EP 0 458 502 offenbart eine Vielzahl unterschiedlichster Katalysatoren für Epoxyverbindungen. In der Auflistung findet sich auch das 1-Ethyl-2,3-dimethylimidazolium- acetat (R1= Ethyl, R2=Methyl und R3 = Methyl in Formel I) und 1-Ethyl-2,3-dimethyl-imidazolium - acetat- essigsäure komplex.

Geeignete latente Katalysatoren sollen mit den Epoxyverbindungen gut mischbar sein. Die Mischungen sollen bei Raumtemperatur und üblichen Lagerbedingungen möglichst lange Zeit stabil sein, so dass sie sich als lagerfähige 1K Systeme eignen. Bei der Verwendung aber sollen die für die Härtung benötigten Temperaturen nicht allzu hoch sein, insbesondere sollen sie deutlich kleiner gleich 200°C sein. Durch tiefere Härtungstemperaturen können Energiekosten eingespart werden und unerwünschte Nebenreaktionen vermieden werden. Trotz der niedrigeren Härtungstemperatur sollen die mechanischen und anwendungstechnischen Eigenschaften der gehärteten Systeme möglichst nicht schlechter werden. Gewünscht ist, das diese Eigenschaften (z.B. Härte, Flexibilität, Klebekraft etc) mindestens gleich gut sind oder sogar besser werden.

Aufgabe der vorliegenden Erfindung waren daher Imidazoliumsalze als latente Katalysatoren und Mischungen dieser Imidazoliumsalze und Epoxyverbindungen, welche die vorstehenden Anforderungen erfüllen.

Demgemäß wurde die oben definierte Verwendung der latenten Katalysatoren der Formel I und wurden Zusammensetzungen, welche die latenten Katalysatoren enthalten, gefunden.

Zu den Imidazoliumsalzen

Erfindungsgemäß werden 1, 3 substituierten Imidazoliumsalze der Formel I 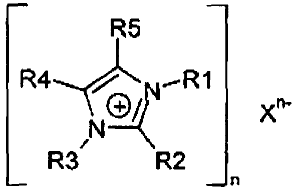 worin
R1 und R3 unabhängig voneinander für einen Methyl-, Ethyl, n-Propyl, Isopropyl-, n-Butyl-, sec.-Butyl oder tert.-Butyl-, Rest stehen
R4, und R5 unabhängig voneinander für ein H-Atom oder für einen organischen Rest mit 1 bis 20 C-Atomen, insbesondere 1 bis 10 C-Atomen, stehen, wobei R4 und R5 auch zusammen einen aliphatischen oder aromatischen Ring ausbilden können, R2 für ein H-Atom steht,
X für ein Anion mit einem pK_{B} -Wert kleiner 13 (gemessen bei 25°C, 1 bar in Wasser oder Dimethylsulfoxid) steht, und ausgewählt ist aus Cyanat und Verbindungen mit 1 bis 20 C-Atomen, welche eine Carboxylatgruppe und außer den Sauerstoffatomen der Carboxylatgruppe keine weiteren Heteroatome enthalten und
n für 1 steht, verwendet.
1-Ethyl-2,3-dimethylimidazoliumacetat (R1= Ethyl, R2=Methyl und R3 = Methyl in Formel I) und der 1-Ethyl-2,3-dimethylimidazolium-acetat-essigsäure-Komplex als Imidazoliumsalz sind in EP 0 458 502 in einer Liste offenbart und wurden hier daher ausgeschlossen.
R1 und R3 stehen unabhängig voneinander für eine Methyl-, Ethyl-, n-Propyl-, Isopropyl-, n-Butyl-, sec.Butyl oder tert.Butylgruppe, wobei die Methyl-, Ethyl-, n-Propyl- und n-Butylgruppe besondere Bedeutung haben.

In einer besonderen Ausführungsform stehen
R1 und R3 für eine Methylgruppe,
R1 und R3 für eine Ethylgruppe,
R1 für eine Methylgruppe und R3 für eine Ethylgruppe,
R1 für eine Methylgruppe und R3 für eine n Propylgruppe,
R1 für eine Methylgruppe und R3 für eine n Butylgruppe,
R4,und R5 stehen unabhängig voneinander für ein H-Atom oder für einen organischen Rest mit 1 bis 20 C-Atomen stehen, wobei R4 und R5 auch zusammen einen aliphatischen oder aromatischen Ring ausbilden können. Der organische Rest kann neben Kohlenstoff und Wasserstoff auch Heteroatome wie Stickstoff oder Sauerstoff enthalten: vorzugsweise kann er Sauerstoff enthalten, insbesondere in Form von Hydroxylgruppen, Estergruppen, Ethergruppen oder Carbonylgruppen.

Insbesondere stehen R4 und R5 unabhängig voneinander für ein H-Atom oder einen Kohlenwasserstoffrest, der außer Kohlenstoff und Wasserstoff allenfalls noch Hydroxylgruppen, Ethergruppen, Estergruppen oder Carbonylgruppen enthalten kann.

R4 und R5 stehen bevorzugt unabhängig voneinander für ein Wasserstoffatom oder einen Kohlenwasserstoffrest mit 1 bis 20 C- Atomen, insbesondere mit 1 bis 10 C-Atomen, der keine sonstigen Heteroatome, z.B. Sauerstoff oder Stickstoff, enthält. Der Kohlenwasserstoffrest kann aliphatisch (wobei auch ungesättigte aliphatische Gruppen eingeschlossen sind) oder aromatisch sein oder sowohl aus aromatischen als auch aus aliphatischen Gruppen bestehen, wobei R4 und R5 auch einen aromatischen oder aliphatischen Kohlewasserstoffring ausbilden können, der gegebenenfalls durch weitere aromatische oder aliphatische Kohlenwasserstoffgruppen substituiert sein kann (die Anzahl der C-Atome des gegebenenfalls substituierten Kohlenwasserstoffrings einschließlich der Substituenten kann dabei vorzugsweise maximal 40, insbesondere maximal 20, besonders bevorzugt maximal 15 bzw. maximal 10 betragen).

Als Kohlenwasserstoffreste genannt seien z.B. die Phenylgruppe, eine Benzylgruppe, eine durch eine oder mehrere C1 bis C4 Alkylgruppen substituierte Phenylgruppe oder Benzylgruppe, Alkylgruppen, Alkenylgruppen und, im Falle, dass R4 und R5 einen Ring ausbilden, ein durch R4 und R5 ausgebildeter aromatischer 5 - oder 6 Ring, ein Cyclohexen - oder Cyclpenten, wobei diese Ringsysteme insbesondere durch eine oder mehrere C1 bis C10, insbesondere C1 bis C4 Alkylgruppen substituiert sein können.

Besonders bevorzugt stehen R4 und R5 unabhängig voneinander für ein H-Atom, eine C1 bis C8 Alkylgruppe, eine C1-C8 Alkenylgruppe. z.B. eine Allygruppe, eine Phenylgruppe oder eine Benzylgruppe.

Ganz besonders bevorzugt stehen R4 und R5 unabhängig voneinander für ein H-Atom, eine Methyl-, Ethyl-, n Propyl-, Isopropyl-, n Butyl-, sec.-Butyl oder tert.-Butylgruppe, wobei die Methyl-, Ethyl-, n Propyl- und n Butylgruppe besondere Bedeutung haben.

R2 steht unabhängig von den anderen Resten R4 und R5 und den übrigen Resten R1 und R3 für ein H-Atom. Imidazollumsalze der Formel I, in denen R2 für ein H Atom steht, haben eine gute Löslichkeit in den Epoxyverbindungen und eine hohe Wirksamkeit als latenter Katalysator.

In einer besonderen Ausführungsform stehen
R2, R4 und R5 für ein H-Atom,

Als Einzelfälle für die Kationen der Verbindungen der Formel I seien genannt:
1-Butyl-3-methyl-imidazolium (R1= Butyl, R3 = Methyl)
1-Butyl-3-ethyl-imidazolium (R1=Butyl, R3=Ethyl)
1,3-Di-methyl-imidazolium (R1= Methyl, R3 =Methyl)
1-Ethyl-3-methyl-imidazolium (R1=Ethyl, R3 =Methyl)
1-methyl-2,3 dimethyl- imidazolium (R1 =Ethyl, R2=Methyl, R3=Methyl)

In Formel I steht n für 1.

X steht für ein Anion mit einem pK_{B} -Wert kleiner 13, bevorzugt kleiner 12, besonders bevorzugt kleiner 11 und ganz besonders bevorzugt kleiner 10,5, ausgewählt aus Cyanat und den obigen Carboxylaten.

Der pK_{B-} Wert wird dazu bei 25°C, 1 bar wahlweise in Wasser oder Dimethylsulfoxid als Lösemittel gemessen; erfindungsgemäß ist es daher ausreichend, wenn ein Anion entweder in Wasser oder in Dimethylsulfoxid den entsprechenden pK_{B-} Wert hat. Dimethylsulfoxid wird insbesondere dann verwendet, wenn das Anion in Wasser nicht gut löslich ist. Zu beiden Lösemitteln finden sich Literaturangaben in Standardwerken. Bei Basen, die in mehreren Stufen mit Wasser zu der entsprechenden mehrprotonigen Säure reagieren, reicht es aus, wenn eine Stufe den vorstehenden pK_{B-} Wert hat.

Der pk_{B-} Wert ist der negative dekadische Logarithmus der Basenkonstanten, K_{B}, welche wiederum die Dissoziationskonstante folgender Reaktion ist:

X-+ H₂O → HX + OH-

Die Dissoziationskonstante der Rückreaktion ist die Säurekonstante K_{S} und der entsprechende negative dekadische Logarithmis der pK_{S} - Wert.

Soweit in der Literatur der pK_{S} - Wert angegeben ist, kann durch den einfachen Zusammenhang

pK_{S} + pK_{B} = 14

der pK_{B} - Wert berechnet werden.

Als Verbindungen mit einer Carboxylatgruppe seien die Anionen von aromatischen, aliphatischen, gesättigten oder ungesättigten C1 bis C20 Carbonsäuren, insbesondere Alkancarbonsäuren, Alkencarbonsäuren, Alkincarbonsäuren, Alkadiencarbonsäuren, Alkatriencarbonsäuren, aufgeführt. Geeignete Alkancarbonsäuren, Alkencarbonsäuren und Alkadiencarbonsäuren sind auch als Fettsäuren bekannt.

Genannt seien insbesondere die Anionen der Benzoesäure (pK_{B} 9,8), Phenylessigsäure (pK_{B} 99,69), der Ameisensäure (Formiat, pK_{B} 10,23), der Essigsäure (Acetate, pK_{B} 9,24), soweit sie nicht unter den Ausschluss in Anspruch 1 fallen.

Literaturangaben zu den pK_{B}-Werten bzw. den entsprechenden pK_{S} - Werten finden sich in handelsüblichen Nachschlagewerken, eine sehr ausführliche Zusammenstellung von R. Williams findet sich auch im Internet unter der Adresse: http://research.chem.psu.edu/brpgroup/pKa_compilation.pdf. Die in der Liste zusammengestellten Werte wurden u.a. folgenden Originalzitaten entnommen:
Brown, H.C. et al., in Braude, E.A.and F.C. Nachod, determination of Organic Structures by Physical Methods, Academic Press, New York, 1955 (Dicarbonsäuren) Dawson, R.M.C. et al., data for Biochemical Research, Oxford, Clarendon Press, 1959 (Carbonsäuren).
Dippy, J.F.J.; Hughes, S.R.C. Rozanski, A J.Chem Soc. 1959, 2492 (substituierte Essigsäuren).
Hildebrand, J.H. Principles of Chemistry, New York, The Macmillan Company, 1940 (Cyanid, Cyanat)

Imidazoliumsalze der Formel I sind im Handel, z.B. von den Firmen BASF, Sigma Aldrich oder Merck erhältlich. Die Anionen der erhältlichen Salze können, wenn gewünscht leicht durch Ionenaustausch durch andere Anionen ersetzt werden.

### Zu den Epoxyverbindungen

Die härtbare Zusammensetzung enthält Epoxyverbindungen. In Betracht kommen insbesondere Epoxyverbindungen mit 1 bis 10 Epoxygruppen, vorzugsweise mit mindestens 2 Epoxygruppen.

Besonders bevorzugt enthält die härtbare Zusammensetzung Epoxyverbindungen mit 2 bis 6, ganz besonders bevorzugt mit 2 bis 4 und insbesondere mit 2 Epoxygruppen.

Bei den Epoxygruppen handelt es sich insbesondere um Glycidylethergruppen, wie sie bei der Umsetzung von Alkoholgruppen mit Epichlorhydrin entstehen.

Bei den Epoxyverbindungen kann es sich um niedermolekulare Verbindungen, welche im allgemeinen ein mittleres Molgewicht Mn kleiner 1000 g/mol haben oder um höhermolekulare Verbindungen (Polymere) handeln. Es kann sich um aliphatische, auch cycloaliphatische Verbindungen oder um Verbindungen mit aromatischen Gruppen handeln.

Insbesondere handelt es sich bei den Epoxyverbindungen um Verbindungen mit zwei aromatischen oder aliphatischen 6-Ringen oder deren Oligomere.

Technisch von Bedeutung sind Epoxyverbindungen, die durch Umsetzung des Epichlorhydrins mit Verbindungen, welche mindestens zwei reaktive H-Atome haben, insbesondere mit Polyolen, erhältlich sind

Technisch von besonderer Bedeutung sind Epoxyverbindungen, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind; als derartige Verbindungen genannt sei insbesondere Bisphenol A und Bisphenol F, sowie hydriertes Bisphenol A und Bisphenol F.

In Betracht kommen auch Umsetzungsprodukte des Epichlorhydrins mit anderen Phenolen, z.B. mit Kresolen oder Phenol-aldehyd-adukten, wie Phenolformaldehydharzen, insbesondere Novolaken.

Es sind natürlich auch Epoxyverbindungen geeignet, welche nicht vom Epichlorhydrin ableiten. In Betracht kommen z.B.Epoxyverbindungen, welche Epoxgruppen durch Umsetzung mit Glycidyl (meth)acrylat), z.B. radikalische Copolymerisation mit Glycidyl (meth)acrylat, enthalten. Genannt sei in diesem Zusammenhang auch ERL-4221 von Dow (CAS Nummer 2386-87-0):

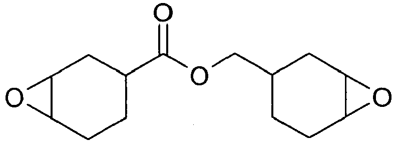

Für die Verwendung der Zusammensetzungen sind insbesondere bei Verarbeitungstemperaturen von 20 bis 100°C, besonders bevorzugt bei 20 bis 40°C, ganz besonders bevorzugt bei 20°C flüssige Epoxyverbindungen geeignet.

Zu sonstigen Bestandteilen der Zusammensetzungen

Die erfindungsgemäße Zusammensetzung kann neben dem latenten Katalysator und der Epoxyverbindung weitere Bestandteile enthalten.

Die Zusammensetzung eignet sich für 1 K-systeme oder auch als lagerfähige Komponente für 2 K-systeme.

Bei 2 K-systemen wird erst kurz vor der Verwendung eine zweite, sehr reaktive Komponente hinzugegeben; nach Zugabe der 2. Komponenten ist die erhaltenen Mischung nicht mehr lagerstabil, weil die Vernetzungsreaktion bzw. Härtung einsetzt und zu einem Viskositätsanstieg führt. 1 K-Systeme enthalten bereits alle notwendigen Bestandteile, sie sind lagerstabil.

Die nachstehenden Ausführungen zur Zusammensetzung gelten sowohl für 1 K- als auch auf 2 K-Systeme, falls im Einzelfall nichts anderes gesagt wird.

Neben den Epoxyverbindungen kann die Zusammensetzung weitere reaktive oder nicht reaktive Bestandteile enthalten.

In Betracht kommen z.B. Phenolharze; unter dem Begriff Phenolharze werden hier Kondensationsprodukte von Phenol oder Derivaten des Phenols, z.B. o-, m- oder p-Kresol, und Aldehyden oder Ketonen, insbesondere Formaldehyd, verstanden. Als Phenolharze besonders geeignet sind Resole und insbesondere sog. Novolake, dabei handelt es sich um Phenolharze, welche durch saure Kondensation von Phenol oder Kresolen mit Formaldehyd erhältlich sind, insbesondere mit einem molaren Überschuss des Phenols. Die Novolake sind vorzugsweise in Alkoholen oder Aceton löslich.

In Betracht kommen auch Anhydrid-vernetzer wie z.B. Phthalsäureanhydrid, Trimellitsäureanhydrid, Benzophenontetracarbonsäure-dianhydrid, Tetrahydrophthalsäureanhydrid, Hexahydrophthalsäureanhydrid, 4-Methyl-tetrahydrophthalsäureanhydrid, 3-Methyl-tetrahydrophthalsäureanhydrid, 4-Methyl-hexahydrophthalsäureanhydrid oder 3-Methyl-hexahydrophthalsäureanhydrid.

Die Phenolharze und Anhydridhärter vernetzen mit Epoxverbindungen in Form einer Polyaddition. Auch diese Polyadditionsreaktion, insbesondere die Polyadditionsreaktion der Epoxyverbindungen mit dem Phenoharz, wird mit dem Imidazoliumsalz der Formel I beschleunigt.

Besonders geeignet sind daher auch erfindungsgemäße Zusammensetzungen, die neben dem Imidazoliumsalz der Formel I, der Epoxyverbindung auch noch mindestens ein Phenolharz, vorzugsweise einen Novolak enthalten.

Als nicht-reaktive Bestandteile seien Harze genannt, die keine weitere Vernetzungsreaktion eingehen, sowie anorganische Füllstoffe oder Pigmente.

Die Zusammensetzung kann auch Lösemittel enthalten. In Betracht kommen gegebenenfalls organische Lösemittel, um gewünschte Viskositäten einzustellen.

In einer bevorzugten Ausführungsform enthält die Zusammensetzung Lösemittel allenfalls in untergeordneten Mengen (kleiner 20 Gew.-Teile, insbesondere kleiner 10 bzw. kleiner 5 Gew.-Teile auf 100 Gew.-Teile Epoxyverbindung) und besonders bevorzugt kein Lösemittel (100 % system).

Bevorzugte Zusammensetzungen bestehen zu mindestens 30 Gew.-%, vorzugsweise zu mindestens 50 Gew.-%, ganz besonders bevorzugt zu mindestens 70 Gew.-% aus Epoxyverbindungen. (abgesehen von ggf. mitverwendeten Lösemitteln).

Der Gehalt des Imidazoliumsalzes der Formel I beträgt vorzugsweise 0,01 bis 10 Gew.-Teile auf 100 Gew. Teile Epoxyverbindung, besonders bevorzugt beträgt er mindestens 0,1, insbesondere mindestens 0,5 und ganz besonders bevorzugt mindestens 1 Gew. Teil auf 100 Gew. Teile Epoxyverbindung; vorzugsweise ist der Gehalt nicht höher als 8 Gew. Teile, insbesondere nicht höher als 6 Gew. Teile auf 100 Gew.-Teile Epoxyverbindung, insbesondere kann der Gehalt z.B. auch 1 bis 6 oder 3 bis 5 Gew.-Teile auf 100 Gew.-Teile Epoxyverbindung betragen.

Neben den Imidazoliumsalzen der Formel I kann die Zusammensetzung natürlich auch weitere, bisher bereits bekannte latente Katalysatoren enthalten, z.B. Addukte des Bortrifluorids an Aminen (BF3-Monoethylamin), quaternäre Phosphoniumverbindungen oder Dicyandiamid (DICY). Unter stickstoffhaltigen Bestandteilen als Härter sind zu verstehen, aromatische und aliphatische Polyamine wie N-Aminoethylpiperazin, Poly-ethylenamin, insbesondere aromatische und aliphatische Diamine, wie Isophorondiamin, Tolylendiamin, Xylylendiamin insbesondere meta-Xylylendiamin, 4,4'-Methylen-dianilin, Ethylendiamin, 1,2-Propandiamin, 1,3-Propandiamin, Piperazin, 4,4'-Diamino-dicyclohexylmethan, 3,3'-Dimethyl-4,4'-diamino-dicyclohexylmethan, Neopentandiamin, 2,2'-Oxybis(ethylamine), Hexamethylendiamin, Octamethylendiamin,
1,12-Diamino-dodecan, 1,10-Diamino-decan, Norbornan-diamine, Menthene-diamine, 1,2-Diaminocyclohexan, 1,3-Bis(aminomethyl)cyclohexan, 1-Methyl-2,4-diaminocyclohexan, Polyetheramine, wie Amine auf Basis von Ethylenoxid, Butylenoxid, Pentylenoxid oder Mischungen dieser Alkylenoxide mit Propylenoxid mit Ammoniak, 4,7,10-Trioxatridecane-1,3-diamine, 4,7,10-Trioxa-1,13-tridecanediamine, XTJ-568 von Huntsman, 1,8-Diamino-3,6-dioxaoctane (XTJ 504 von Huntsman), 1,10-Diamino-4,7-dioxadecane (XTJ 590 von Huntsman), 4,9-Dioxadodecan-1,12-diamin (von BASF), 4,7,10-Trioxatridecane-1,3-diamine (von BASF), XTJ 566 von Huntsman, Polyetheramine auf Basis von Ammoniak, Propylen- und Ethylenoxid wie XTJ 500, XTJ, 501, XTJ 511 von Huntsman, Polyetheramine auf Basis von poly(1,4-Butandiol) bzw. Poly(THF), Propylenoxid und Ammoniak: XTJ 542, XTJ 559 von Huntsman, Polyetheramin T 403, Polyetheramin T 5000, wobei Diethylentriamin, Trietylentetraamin und Polyether auf Basis von Propylenoxid mit Ammoniak ausgenommen sind.

Ausgewählte Beispiele für weitere stickstoffhaltige Bestandteile sind substituierte Imidazole wie 1-Methylimidazol, 2-Phenylimidazol, 1-Cyanoethylimidazol, Imidazoline wie 2-Phenyl-imidazolin, tertiäre Amine wie N,N-Dimethyl-benzylamin, DMP 30 (2,4,6-Tris-(dimethylaminomethyl)-phenol, DABCO (1,4-Diazabicyclo[2,2,2]octan), Ketimine wie Epi-Cure 3502, Polyamidoamine wie Versamid® 140 von Cognis, Urone wie 3-(4-chlorophenyl)-1,1-dimethyl-harnstoff (Monuron), 3-(3,4-dichlorophenyl)-1,1-dimethylharnstoff (Diuron), 3-phenyl-1,1-dimethylharnstoff (Fenuron), 3-(3-chloro-4-methylphenyl)-1,1-dimethyl-harnstoff (Chlorotoluron), Tolyl-2,4 bis(N,Ndimethylcarbamid) Amicure UR2T (Air Products), Tetraalkyl-guanidine wie N,N,N',N'-Tetramethylguanidin, Reaktionsprodukte von DICY mit Aminen, so genannte Biguanidine wie HT 2844 von Vantico.

Die Zusammensetzung ist vorzugsweise bei Verarbeitungstemperaturen von 20 bis 100°C, besonders bevorzugt bei 20 bis 40°C, ganz besonders bevorzugt bei 20°C flüssig.

Die Zunahme der Viskosität der gesamten Zusammensetzung bei Temperaturen bis zu 50°C ist über einen Zeitraum von 10 Stunden, insbesondere von 100 Stunden (ab Zugabe des latenten Katalysators) kleiner als 20 %, besonders bevorzugt kleiner als 10 %, ganz besonders bevorzugt kleiner 5 %, insbesondere kleiner 2 % bezogen auf die Viskosität der Zusammensetzung ohne den latenten Katalysator bei 21°C, 1 bar.

Die vorstehende Zusammensetzung eignet sich als 1 K-System.

Sie eignet sich auch als lagerfähige Komponente eines 2 K-systems.

Im Fall der 2 K- Systeme werden lediglich hoch reaktive Komponenten, z.B. übliche, sehr reaktive Amin-härter oder reaktive Anhydridhärter vor der Verwendung zugesetzt, danach setzt die Härtung, erkennbar an einem Viskositätsanstieg ein.

In Betracht kommen z.B. reaktive Polyamine oder Polyanhydride, welche üblicherweise als Vernetzer für Epoxyverbindungen in 2 K- Systemen verwendet werden. Bekannte Aminvernetzer sind insbesondere aliphatische Polyamine wie Diethylentriamin Triethylentetra-amin oder Amine auf Basis von Propylenoxid und Ammoniak (Polyetheramine wie D 230, D 2000, D 400).

### Zur Härtung und Verwendung

Die Zusammensetzungen, welche Imidazoliumsalze der Formel I enthalten, sind lagerstabil. Die Imidazoliumsalze der Formel I sind gut in den Epoxyverbindungen und in den erfindungsgemäßen Zusammensetzungen löslich. Die Imidazoliumsalze der Formel I sind in den Zusammensetzungen als latente Katalysatoren wirksam. Ihre Effektivität bei der Polymerisation oder Vernetzung der Epoxyverbindungen ist sehr gut.

Bei üblichen Lagertemperaturen unter 40°C, insbesondere unter 30°C ist ein Anstieg der Viskosität der Zusammensetzungen nicht oder kaum zu beobachten. Die Zusammensetzungen eignen sich daher als 1 K- Systeme. 1 K-Systeme benötigen vor der Verwendung nicht den Zusatz einer 2. Komponenten, welche eine Härtung oder Vernetzung bewirkt.

Die Zusammensetzungen eignen sich natürlich auch als lagerfähige Komponente für 2 K-Systeme (s.o.).

Die Härtung der Zusammensetzungen als 1 K-system oder auch als 2 K-system kann bei geringeren Temperaturen erfolgen als es mit den bisher bekannten latenten Imidazolium-Katalysatoren möglich war. Die Härtung kann bei Normaldruck und bei Temperaturen kleiner 250°C, insbesondere bei Temperaturen kleiner 200°C, vorzugsweise bei Temperaturen kleiner 175°C, besonders bevorzugt bei Temperaturen kleiner 150°C und ganz besonders bevorzugt bei Temperaturen kleiner 125°C und sogar kleiner 100°C erfolgen. Möglich ist auch eine Härtung bei Temperaturen kleiner 80°C. Die Härtung kann insbesondere in einem Temperaturbereich von 40 bis 175°C, insbesondere von 60 bis 150°C, bzw. von 60 bis 125°C erfolgen.

Die erfindungsgemäßen Zusammensetzungen eignen sich als Beschichtungs- oder Imprägnierungsmittel, als Klebstoff, als Verbundwerkstoff, zur Herstellung von Formkörpern oder als Gießmassen zur Einbettung, Anbindung oder Verfestigung von Formkörpern. Dies und die nachstehenden Ausführungen dazu gelten sowohl für die 1 K - als auch für 2 K- Systeme, bevorzugte Systeme sind bei allen genannten Verwendungen die 1 K-systeme.

Als Beschichtungsmittel seien z.B. Lacke genannt. Insbesondere können mit den erfindungsgemäßen Zusammensetzungen (1 K oder 2 K) kratzfeste Schutzlacke auf beliebigen Substraten, z.B. aus Metall, Kunststoff oder Holzwerkstoffen erhalten werden. Die Zusammensetzungen eignen sich auch als Isolierbeschichtungen in elektronischen Anwendungen, z.B. als Isolierbeschichtung für Drähte und Kabel. Genannt sei auch die Verwendung zur Herstellung von Photoresisten. Sie eignen sich insbesondere auch als Reparaturlack, z.B. auch bei der Ausbesserung von Rohren ohne Demontage der Rohre (cure in place pipe (CIPP) rehabilitation). Sie eignen sich auch zur Versiegelung von Fußböden.

Als Klebstoffe seien 1 K oder 2 K- Strukturklebstoffe erwähnt. Strukturklebstoffe dienen zur dauerhaften Verbindung von Formteilen miteinander. Die Formteile können aus beliebigem Material sein; in Betracht kommen Materialien aus Kunststoff, Metall, Holz, Leder, Keramik etc. Es kann sich dabei auch um Schmelzklebstoffe (hot melt adhesives) handeln, die erst bei höherer Temperatur fließfähig und verarbeitbar sind. Es kann sich auch um Fußbodenklebstoffe handen. Die Zusammensetzungen eignen sich auch als Klebstoffe für die Herstellung von Leiterplatten (electronic curcuits), insbesondere auch nach der SMT Methode (surface mounted technology).

In Verbundwerkstoffen (Composites) sind unterschiedliche Materialien, z.B. Kunststoffe und Verstärkungsmaterialien (Fasern, Carbonfasern) miteinander verbunden.

Die Zusammensetzungen eignen sich z.B. zur Herstellung von vorimprägnierter Fasern, z.B. Prepregs und ihrer weiteren Verarbeitung zu Verbundwerkstoffen.

Als Herstellverfahren für Verbundwerkstoffe seien die Härtung von vorimprägnierten Fasern oder Fasergeweben (z.B. Prepregs) nach Lagerung oder aber die Extrusion, Strangziehen (pultrusion), Wickeln (winding) und resin transfer molding (RTM), resin infusion technologies (RI) genannt.

Insbesondere können die Fasern mit der erfindungsgemäßen Zusammensetzung getränkt werden und danach bei einer höheren Temperatur gehärtet werden. Während der Tränkung und gegebenenfalls einer anschließenden Lagerung setzt noch keine oder nur eine geringfügige Härtung ein.

Als Gießmassen zur Einbettung, Anbindung oder Verfestigung von Formkörpern werden die Zusammensetzungen z.B. in elektronischen Anwendungen eingesetzt. Sie eignen sich als Flip-chip underfill oder als Elektrogießharze für potting, casting und (glob-top-) encapsulation.

### Beispiele

### Einsatzstoffe

Als Epoxyverbindung wurde der Diglycidylether von Bisphenol A (kurz DGEBA) verwendet, erhältlich als Handelsprodukt von Nan Ya unter der Bezeichnung NPEL 127H.

### Untersuchte Zusammensetzungen

Es wurden jeweils 5 Gew.-Teile des Imidazoliumsalzes oder eines Gemisches von Imidazoliumsalzen mit 100 Gew.-Teilen der Epoxyverbindung gemischt. In Tabelle 1 sind die Zusammensetzungen und Ergebnisse aufgelistet. In den Fällen von 1^{x} und 1^{xx} wurden auch Mischungen mit weiteren Bestandteilen geprüft (siehe Fußnote unter Tabelle 2).

### Messmethoden

Das Einsetzen und der Ablauf der Härtung wurde mit der Differential Scanning Kalorimetrie (DSC) untersucht. Dazu wurden 5 bis 15 Milligramm der Zusammensetzung wurden in einem DSC Kalorimeter (DSC 822, Mettler Toledo) aufgeheizt mit einer konstanten Geschwindigkeit von 10°C/min.

Bestimmt wurden To (Beginn der exothermen Polymerisationsreaktion, onset temperature, Tmax (Temperaturmaximum des exothermen Peaks, entspricht der maximalen Reaktionsbeschleunigung) und ΔH (Integral der DSC Kurve, entspricht der gesamten freigewordenen Wärmemenge der Polymerisationsreaktion).

Zusätzlich wurde die Glasübergangstemperatur (Tg) der gehärteten, durchreagierten Probe wie folgt durch DSC Messung bestimmt:

20 g der ungehärteten Zusammensetzung wurden mit einer Filmdicke von 3 bis 4 mm in ein Aluminiumpfännchen gegeben und für jeweils 30 Minuten bei 40°C, 60°C, 80°C, 100°C, 120°C und 140°C gehärtet. Die Tg der gehärteten Probe wurde durch DSC Messung mit einer Aufheizrate von 30°C/ min als Mittelwert von drei unabhängigen Messungen bestimmt.

Die Lagerstabilität (Topfzeit) wurde durch Messung der relativen Viskosität (GEL-NORM®-RVN Viscosimeter) überprüft. Bei unterschiedlichen Temperaturen (25°C, 80°C, 100°C und 120°C wurde die Zeit in Tagen (d) oder Minuten (min) bestimmt. Die angegebene Zeit ist die Zeit, nach der die Mischung noch gießfähig ist.

**Tabelle 1: Imidazoliumsalze, physikalische Eigenschaften**

| Salz Nr | Imidazoliumkation | Anion | pkb-Wert des Anions bei 25°C in Wasser |
|---|---|---|---|
| 1 | 1-Ethyl-3-methyl-imidazolium | Acetat | 9,2 |
| 2 | 1-Butyl-3-ethyl-imidazolium | Acetat | 9,2 |
| 3 | 1,3-Di-methyl-imidazolium | Acetat | 9,2 |
| 4 | 1-Butyl-3-methyl-imidazolium | Formiat | 10,2 |
| 5 | 1-Ethyl-3-methyl-imidazolium | Methylcarbonat | < 10 |
| V1 | 1-Butyl-3-methyl-imidazolium | Chlorid | 14 |
| V2 | 1-Ethyl-3-methyl imidazolium | Methansulfonat | 14 |

**Tabelle 2: Ergebnisse der DSC Messung und Lagerstabilität**

| Salz Nr | To (°C) | Tmax (°C) | ΔH (J/g) | Tg (°C) | Lager-stabilität 25°C (d) | Lager-stabilität 80°C (min) | Lager-stabilität 120°C (min) |
|---|---|---|---|---|---|---|---|
| 1 | 73 | 114 | 495 | 133 | 2 | 11 | |
| 2 | 98 | 117 | 479 | 141 | 2 | 14 | |
| 3 | 96 | 119 | 475 | n.d. | 1 | 9 | |
| 4 | 94 | 124 | 423 | 138 | 2 | 20 | |
| 5 | 107 | 141 | 538 | 130 | 4 | 49 | |
| 1^{x} | 123 | 162 | 334 | 156 | | | 15,8 |
| 1^{xx} | 146 | 162 | 294 | 157 | | | 18,3 |
| V1 | 192 | 245 | 518 | 104 | >20 | >300 | |
| V2 | 280 | 315 | 418 | n.b. | n.b. | >300 | |

| | | | | | | | |
|---|---|---|---|---|---|---|---|
| 1^{x} Die geprüfte Mischung enthielt auch den Anydrid-Härter MHHPSA (Methylhexahydrophthalsäureanhydrid), Mol - verhältnis Epoxid : Anydrid 1 : 0,9, 1 Gew.-Teil Imidazoliumsalz auf 100 Gew.-Teile Epoxid Härtungsbedingungen : 3 Stunden bei 100°C und 2 Stunden bei 150°C 1^{xx} Die geprüfte Mischung enthielt auch den Novolak PHS 6000 IZ04 der Hexion Specialty GmbH. Molverhältnis Epoxid : Hydroxy 1 : 0,9, 1 Gew.-Teil Imidazoliumsalz auf 100 Gew. teile Epoxid + Novolack Härtungsbedingungen: 2 Stunden bei 140°C und 2 Stunden bei 100°C | | | | | | | |

Mischungen von EMIM Acetat und DICY sind bis zu einem Verhältnis von 10:9 flüssige und homogene Lösungen, die sich daher leicht zu dem Epoxidharz dosieren lassen.

**Tabelle 3 und 4: (pKb Lactat = 10,1)**

| Zusammensetzung (Gewichtsanteile) | DSC Daten | | | | Lagerstabilität bei 80°C [°C] [min] |
|---|---|---|---|---|---|
| | [°C] | Tₒ Tₘₐₓ [°C] [J/g] | ΔH | T_{g} | |
| DGBQ/EMIM Lactat (6) 100/5 | 95 | 132 | 457 | 133 | 30 |

**Tabelle 5: Härtung von DGEBA mit EMIM Acetat (1) / DICY Mischungen**

| Zusammensetzung (Gewichtsanteile) | DSC Daten | | | | Lagerstabilität bei 80°C [sec] |
|---|---|---|---|---|---|
| | Tₒ [°C] | Tₘₐₓ [°C] | ΔH [J/g] | T_{g} [°C] | |
| DGEBA/1 100/5 | 73 | 114 | 495 | 133 | 660-720 |
| DGEBA/1/DICY 100/3,75/1,25 | 116 | 153 | 485 | 140 | 2040-2440 |
| DGEBA/1/DICY 100/2,5/2,5 | 130 | 140 | 532 | 152 | 5140-6010 |
| DGEBA/1/DICY 100/1,25/3,75 | 112 | 127 | 509 | 160 | 7080-9120 |
| DGEBA/1/DICY 100/5/5 | 130 | 140 | 529 | 133 | 3380-4150 |

| | | | | | |
|---|---|---|---|---|---|
| Härtung je 30 min bei 60°C, 80 °C, 100 °C, 120 °C, 140 °C, 3,5 h bei 160 °C | | | | | |

Bei der Härtung von DGEBA mit 5% EMIM Acetat beträgt die Lagerstabilität rund 11 Minuten. Überaschenderweise führt die Zugabe von DICY zu einer Erhöhung der Lagerstabilität des Systems und zu vergleichbaren oder erhöhten Glasübergangstemperaturen der ausgehärteten Epoxidharze. Die Mischungen von EMIM Acetat (1) mit DI-CY ist flüssig und daher besonders gut mischbar mit dem Epoxidharz.

## Patentansprüche

1. Verwendung von 1, 3 substituierten Imidazoliumsalzen der Formel I 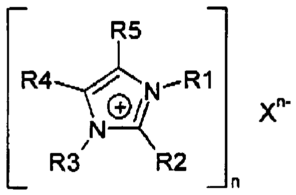 worin
R1 und R3 unabhängig voneinander für einen Methyl-, Ethyl-, n-Propyl-, Isopropyl-, n-Butyl-, sec.-Butyl- oder tert.-Butyl Rest stehen
R4, und R5 unabhängig voneinander für ein H-Atom oder für einen organischen Rest mit 1 bis 20 C-Atomen stehen, wobei R4 und R5 auch zusammen einen aliphatischen oder aromatischen Ring ausbilden können,
R2 für ein H-Atom steht,
X für ein Anion mit einem pK_{B} - Wert kleiner 13 (gemessen bei 25°C, 1 bar in Wasser oder Dimethylsulfoxid) steht und ausgewählt ist aus Cyanat und Verbindungen mit 1 bis 20 C-Atomen, welche eine Carboxylatgruppe und außer den Sauerstoffatomen der Carboxylatgruppe keine weiteren Heteroatome enthalten und
n für 1 steht,
wobei 1-Ethyl-2,3-dimethylimidazoliumacetat und 1-Ethyl-2,3-dimethylimi-dazolium - acetat-essigsäure komplex als Imidazoliumsalz ausgeschlossen sind als latenter Katalysator für die Härtung von Epoxyverbindungen enthaltenden Zusammensetzungen.

2. Verwendung gemäß Anspruch 1, **dadurch gekennzeichnet, dass** R4 und R5 unabhängig voneinander für ein H-Atom oder eine C1 bis C8 Alkylgruppe, eine C1 bis C8 Alkenylgruppe, insbesondere eine Allylgruppe, eine Phenylgruppe oder eine Benzylgruppe stehen.

3. Verwendung gemäß einem der Ansprüche 1 bis 2, **dadurch gekennzeichnet, dass** X für ein Carboxylat- Anion steht.

4. Verwendung gemäß einem der Ansprüche 1 bis 3, **dadurch gekennzeichnet, dass** die härtbare Zusammensetzung Epoxyverbindungen mit mindestens 2 Epoxygruppen enthält.

5. Verwendung gemäß einem der Ansprüche 1 bis 4, **dadurch gekennzeichnet, dass** die härtbare Zusammensetzung Epoxyverbindungen mit im Mittel 2 Epoxygruppen enthält.

6. Verwendung gemäß einem der Ansprüche 1 bis 5, **dadurch gekennzeichnet, dass** die Zusammensetzung Epoxyverbindungen enthält, die durch Umsetzung von Epichlorhydrin mit Alkoholen erhältlich sind.

7. Verwendung gemäß einem der Ansprüche 1 bis 6, **dadurch gekennzeichnet, dass** die Zusammensetzung zu mindestens 30 Gew. %, vorzugsweise zu mindestens 50 Gew. % aus Epoxyverbindungen besteht, abgesehen von Wasser und organischen Lösemitteln.

8. Verwendung gemäß einem der Ansprüche 1 bis 7, **dadurch gekennzeichnet, dass** die Zusammensetzung zusätzlich weitere Bestandteile, z.B. Anhydrid-härter oder Phenolharze, insbesondere Novolake, enthält.

9. Verwendung gemäß einem der Ansprüche 1 bis 8, **dadurch gekennzeichnet, dass** der Gehalt des latenten Katalysators 0,01 bis 10 Gew. Teile auf 100 Gew. teile Epoxyverbindung beträgt.

10. Härtbare Zusammensetzungen, enthaltend Epoxyverbindungen und einen latenten Katalysator der Formel I.

11. Härtbare Zusammensetzung nach Anspruch 10, **dadurch gekennzeichnet, dass** sie DICY und/oder Aminvemetzer enthält.

12. Härtbare Zusammensetzung nach einem der Ansprüche 10 bis 11 , **dadurch gekennzeichnet, dass** sie stickstoffhaltige Bestandteile als Härter enthält.

13. Härtbare Zusammensetzung nach Anspruch 12, **dadurch gekennzeichnet dass** sie eine bei Raumtemperatur flüssige und homogene Mischung von DICY in den Imidazoliumsalzen enthält.

14. Härtbare Zusammensetzungen gemäß einem der Ansprüche 10 bis 13, **dadurch gekennzeichnet, dass** sie zu mindestens 30 Gew. % aus Epoxyverbindungen bestehen, abgesehen von Wasser und organischen Lösemitteln.

15. Verwendung von härtbaren Zusammensetzungen gemäß einem der Ansprüche 10 bis 14 als Beschichtungs- oder Imprägnierungsmittel, als Klebstoff, in Verbundwerkstoffen, zur Herstellung von Formkörpern oder als Gießmassen zur Einbettung, Anbindung oder Verfestigung von Formkörpern.

16. Verwendung von härtbaren Zusammensetzungen gemäß einem der Ansprüche 10 bis 14 zur Herstellung von Verbundwerkstoffen durch die Härtung von vorimprägnierten Fasern oder Fasergeweben oder durch Extrusion, Strangziehen, Wickeln, und resin transfer molding, resin infusion technologies.

## Claims

1. The use of 1,3-substituted imidazolium salts of the formula I 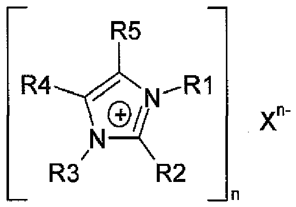 in which
R1 and R3 independently of one another are a methyl, ethyl, n-propyl, isopropyl, n-butyl, sec-butyl or tert-butyl radical,
R4, and R5 independently of one another are an H atom or an organic radical having 1 to 20 C atoms, it also being possible for R4 and R5 together to form an aliphatic or aromatic ring,
R2 is an H atom,
X is an anion having a pKₐ of less than 13 (measured at 25°C, 1 bar in water or dimethyl sulfoxide) and is selected from cyanate and compounds having 1 to 20 C atoms that comprise a carboxylate group and no further heteroatoms other than the oxygen atoms of the carboxylate group and
n is 1,
with the exception of 1-ethyl-2,3-dimethylimidazolium acetate and of 1-ethyl-2,3-dimethylimidazolium acetate-acetic acid complex in imidazolium salt form
as latent catalysts for curing a composition comprising epoxy compounds.

2. The use according to claim 1, wherein R4, and R5 independently of one another are an H atom or a C1 to C8 alkyl group, a C1 to C8 alkenyl group, more particularly an allyl group, a phenyl group or a benzyl group.

3. The use according to either one of claims 1 to 2, wherein X is a carboxylate anion.

4. The use according to any one of claims 1 to 3, wherein the curable composition comprises epoxy compounds having at least 2 epoxy groups.

5. The use according to any one of claims 1 to 4, wherein the curable composition comprises epoxy compounds having on average 2 epoxy groups.

6. The use according to any one of claims 1 to 5, wherein the composition comprises epoxy compounds obtainable by reacting epichlorohydrin with alcohols.

7. The use according to any one of claims 1 to 6, wherein the composition is composed of at least 30% by weight, preferably at least 50% by weight, of epoxy compounds, in addition to water and organic solvents.

8. The use according to any one of claims 1 to 7, wherein the composition further comprises additional ingredients, examples being anhydride curing agents or phenolic resins, more particularly novolaks.

9. The use according to any one of claims 1 to 8, wherein the amount of the latent catalyst is 0.01 to 10 parts by weight per 100 parts by weight of epoxy compound.

10. A curable composition comprising epoxy compounds and a latent catalyst of the formula I.

11. The curable composition according to claim 10, which comprises DICY and/or amine crosslinkers.

12. The curable composition according to either of claims 10 and 11, which comprises nitrogen-containing constituents as curing agents.

13. The curable composition according to claim 12, which comprises a mixture of DICY in the imidazolium salts which is homogeneous and liquid at room temperature.

14. The curable composition according to any one of claims 10 to 13, composed of at least 30% by weight of epoxy compounds, in addition to water and organic solvents.

15. The use of a curable composition according to any one of claims 10 to 14 as a coating or impregnating composition, as an adhesive, in composite materials, for producing shaped articles or as a casting compound for embedding, attaching or solidifying shaped articles.

16. The use of a curable composition according to any one of claims 10 to 14 for producing composite materials by the curing of preimpregnated fibers or woven fiber fabrics or by extrusion, pultrusion, winding, resin transfer molding or resin infusion technologies.

## Revendications

1. Utilisation de sels d'imidazolium 1,3-substitués de formule 1 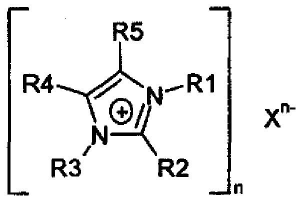 où
R1 et R3 représentent, indépendamment l'un de l'autre, un radical méthyle, éthyle, n-propyle, isopropyle, n-butyle, sec-butyle ou tert-butyle
R4 et R5 représentent, indépendamment l'un de l'autre, un atome d'H ou un radical organique comprenant 1 à 20 atomes de carbone, R4 et R5 pouvant également former, ensemble, un cycle aliphatique ou aromatique,
R2 représente un atome d'H,
X représente un anion d'une valeur pK_{B} inférieure à 13 (mesurée à 25°C, 1 bar, dans l'eau ou le diméthylsulfoxyde) et est choisi parmi un cyanate et des composés comprenant 1 à 20 atomes de carbone, qui contiennent un groupe carboxylate et qui, en dehors des atomes d'oxygène du groupe carboxylate, ne contiennent pas d'autres hétéroatomes, et
n vaut 1,
l'acétate de 1-éthyl-2,3-diméthylimidazolium et le complexe acétate de 1-éthyl-2,3-diméthylimidazolium-acide acétique étant exclus en tant que sel d'imidazolium
comme catalyseur latent pour le durcissement de compositions contenant des composés époxy.

2. Utilisation selon la revendication 1, **caractérisée en ce que** R4 et R5 représentent, indépendamment l'un de l'autre, un atome d'H ou un groupe alkyle en C₁ à C₈, un groupe alcényle en C₁ à C₈, en particulier un groupe allyle, un groupe phényle ou un groupe benzyle.

3. Utilisation selon l'une quelconque des revendications 1 et 2, **caractérisée en ce que** X représente un anion carboxylate.

4. Utilisation selon l'une quelconque des revendications 1 à 3, **caractérisée en ce que** la composition durcissable contient des composés époxy comprenant au moins 2 groupes époxy.

5. Utilisation selon l'une quelconque des revendications 1 à 4, **caractérisée en ce que** la composition durcissable contient des composés époxy comprenant en moyenne 2 groupes époxy.

6. Utilisation selon l'une quelconque des revendications 1 à 5, **caractérisée en ce que** la composition contient des composés époxy, qui peuvent être obtenus par transformation d'épichlorhydrine avec des alcools.

7. Utilisation selon l'une quelconque des revendications 1 à 6, **caractérisée en ce que** la composition est constituée, à raison d'au moins 30% en poids, de préférence d'au moins 50% en poids, de composés époxy, hormis l'eau et des solvants organiques.

8. Utilisation selon l'une quelconque des revendications 1 à 7, **caractérisée en ce que** la composition contient en outre d'autres constituants, par exemple des durcisseurs à base d'anhydride ou des résines phénoliques, en particulier des novolaques.

9. Utilisation selon l'une quelconque des revendications 1 à 8, **caractérisée en ce que** la teneur du catalyseur latent est de 0,01 à 10 parties en poids pour 100 parties en poids de composé époxy.

10. Compositions durcissables, contenant des composés époxy et un catalyseur latent de formule I.

11. Composition durcissable selon la revendication 10, **caractérisée en ce qu'**elle contient du DICY et/ou un réticulant à fonction amine.

12. Composition durcissable selon l'une quelconque des revendications 10 à 11, **caractérisée en ce qu'**elle contient des constituants azotés comme durcisseur.

13. Composition durcissable selon la revendication 12, **caractérisée en ce qu'**elle contient un mélange, liquide à température ambiante et homogène, de DICY dans les sels d'imidazolium.

14. Compositions durcissables selon l'une quelconque des revendications 10 à 13, **caractérisées en ce qu'**elles sont constituées, à raison d'au moins 30% en poids, de composés époxy, hormis l'eau et des solvants organiques.

15. Utilisation de compositions durcissables selon l'une quelconque des revendications 10 à 14 comme agent de revêtement ou d'imprégnation, comme adhésif, dans des matériaux composites, pour la fabrication de corps moulés ou comme masses de coulage pour l'enrobage, la liaison ou la solidification de corps moulés.

16. Utilisation de compositions durcissables selon l'une quelconque des revendications 10 à 14 pour la fabrication de matériaux composites par le durcissement de fibres ou de tissus de fibres imprégnés au préalable ou par extrusion, extrusion inverse, enroulement et des technologies de moulage par injection de résine ("resin transfer molding") ou par infusion de résine.
